Europäisches Patentamt

European Patent Office

Office européen des brevets

(19)

(11) Numéro de publication: **0 040 135**
**A1**

## (12) DEMANDE DE BREVET EUROPEEN

(21) Numéro de dépôt: **81400700.1**

(22) Date de dépôt: **05.05.81**

(51) Int. Cl.³: **A 01 K 7/04**

(30) Priorité: **08.05.80 FR 8010960**

(43) Date de publication de la demande:
**18.11.81 Bulletin 81/46**

(84) Etats contractants désignés:
**BE CH DE GB IT LI NL**

(71) Demandeur: **ETABLISSEMENTS GARY, SARL**
**112 rue Pasteur**
**F-59370 Mons en Baroeul(FR)**

(72) Inventeur: **Cauwel, Claude, née Gary, Cécile**
**2 Avenue de Verdun**
**F-59370 Mons en Baroeul(FR)**

(72) Inventeur: **Gary, René Claude**
**28 rue Henri Poissonnier**
**F-59370 Mons en Baroeul(FR)**

(72) Inventeur: **Gary, Jacques**
**39 Boulevard Gayet**
**F-59370 Mons en Baroeul(FR)**

(72) Inventeur: **Altide, Jacques**
**La Pommeraie 38 Bis rue Clémenceau**
**F-59830 Bourghelles(FR)**

(74) Mandataire: **Ecrepont, Robert**
**Cabinet Ecrepont 12 Place Simon Vollant (Porte de Paris)**
**F-59800 Lille(FR)**

(54) **Abreuvoir à niveau constant.**

(57) L'invention se rapporte à un abreuvoir à niveau de liquide constant comprenant une cuve (1) logeant un flotteur (11) et qui est fixée à une paroi (3) par un support (2) comprenant une platine (20) traversée par une douille (40) formant l'arrivée du liquide.

Il est caractérisé en ce que le flotteur (11) est par son axe (36) associé à la cuve amovible (1).

Application à l'industrie de la construction de matériel d'élevage.

EP 0 040 135 A1

Croydon Printing Company Ltd.

./...

Fig. _2

0040135

1

## Abreuvoir à niveau de liquide constant.

L'invention se rapporte à un abreuvoir à niveau de liquide constant, plus particulièrement pour petits animaux à bec ou à lèvres et notamment pour lapins.

De tous temps, les éleveurs de ces animaux ont recherché les moyens de leur apporter leur boisson d'une manière évitant l'ouverture de la cage car, bien évidemment, cette ouverture pourrait permettre à un animal de s'échapper ou au moins pourrait l'effaroucher et, quoiqu'il en soit, ferait perdre du temps.

Les premières recherches ont abouti à l'utilisation d'une simple auge qui était introduite par un orifice spécialement exécuté dans une des parois de la cage qui, éventuellement, porte alors, d'une part, sur sa face interne, des guides ou glissières saisissant les bords de la dite auge, et/ou d'autre part, sur sa face externe, un verrou évitant le retrait involontaire de l'auge (brevet US 1.879.332).

Dans une batterie d'élevage comprenant de nombreuses cages, la surveillance des niveaux des différentes auges et les manoeuvres indispensables pour réaliser les appoints jugés nécessaires seraient fastidieuses.

C'est pourquoi à ce jour, on utilise presque exclusivement des moyens automatiques d'amenée du liquide dans la cage.

Dans une première forme de réalisation de ces moyens automatiques, dans chaque cage de la batterie d'élevage, est prévu un organe de distribution, raccordé à une canalisation d'amenée du liquide. Cet organe de distribution consiste en une douille dans laquelle est prévue une soupape, qui est sollicitée vers son siège par la pression du liquide présent dans la canali sation, mais qui peut en être momentanément écartée par l'animal lui même qui, lorsqu'il vient prélever sa boisson à l'extrémité libre de la douille de l'organe de distribution, repousse dans la douille la partie saillante d'une tige reliée, directement ou indirectement, à la soupape (brevet français 1.512.997).

Si une telle installation convient bien pour des animaux adultes, avant de parvenir à prélever sa boisson, le jeune animal risque malheureusement de passer plusieurs jours sans boire et donc de se déshydrater. De plus, sans venir boire, un animal peut s'appuyer involontairement sur la tige et provoquer une inondation.

Aussi, la plupart des éleveurs préfèrent-ils disposer d'abreuvoirs à auge où, dès son plus jeune âge, l'animal prélève aisément sa boisson mais aussi qui, pour éviter les problèmes de maintenance des abreuvoirs à auge du type cité plus haut, sont pourvus de moyens automatiques de remplissage de l'auge.

Dans certaines réalisations, ces auges ont leur remplissage qui est commandé par l'animal qui, pendant qu'il prélève sa boisson, actionne un organe placé dans l'auge.

Dans d'autres réalisations, c'est l'auge qui est montée oscillante en fonction de son poids et actionne un mécanisme commandant la mise en route ou l'arrêt du remplissage de l'auge.

Avec des abreuvoirs selon ces deux modes de réalisation, si on obtient l'avantage du remplissage automatique, on déplore toujours de nombreux dégâts par inondation, par coincement de l'organe de commande ou de l'auge par des détritus ou l'animal lui-même, ce qui déclenche évidemment une ouverture intempestive de l'arrivée du liquide.

Pour toutes ces raisons, l'abreuvoir du type le plus apprécié à ce jour comprend (brevet français 71.18734), fixée dans un orifice de l'une des parois de la cage, une cuve qui par une cloison située dans le plan de la paroi est scindée en deux parties intercommunicantes, l'une située dans la cage formant l'auge, l'autre située à l'extérieur de la cage formant un réservoir de liquide dans lequel plonge un flotteur contrôlant l'ouverture d'une canalisation d'amenée du liquide. Pour la fixation de la cuve à la paroi de la cage est prévu un support soit solidaire de la cuve (brevet français 71.18734), soit distinct et réalisant conjointement un couvercle pour le réservoir (brevet français 75.14021).

Dans tous les abreuvoirs de ce type, pour obtenir l'automaticité de la commande, ce couvercle de réservoir, qu'il soit, comme dans le brevet ci-dessus, solidaire du support ou qu'il en soit séparé (brevets français 76.16723 et 76.35972), il est toujours traversé par une douille d'arrivée du liquide en regard de l'orifice de sortie de laquelle le flotteur (brevet français 76.35972) ou son bras (brevet français 75.14021) porte un obturateur en matériau souple qui, sous l'action du flotteur recevant sa poussée d'Archimède, s'applique directement sur l'orifice de sortie qui réalise lui-même son siège.

On connaît également (brevet allemand 944.824) un abreuvoir dont la douille de sortie est pourvue d'un clapet qui ne s'ouvre que lors de la remontée d'une extrémité d'un levier qui, par son axe intermédiaire, est associé au support et à la douille et dont l'autre extrémité porte le flotteur plongeant dans la cuve amovible.

Avec les abreuvoirs desservant les autres cages de la batterie, cet abreuvoir est, par la dite douille, raccordé à une canalisation parvenant d'une source de liquide sous pression, telle une conduite d'arrivée d'eau ou une citerne.

Du fait de ce mode d'obturation, avant tout démontage de la cuve de l'un des abreuvoirs de la batterie, par exemple en vue du nettoyage, il est nécessaire de couper l'arrivée générale du liquide à moins qu'en amont du siège de l'obturateur porté par le flotteur, chaque abreuvoir ou embranchement de canalisation porte également une vanne, ce qui évidemment augmente fortement le prix de revient. Quant à la douille d'arrivée d'eau et au couvercle, ils sont soit monoblocs, soit reliés entre eux par des éléments de raccordement qui sont complexes et dont de ce fait les montages /démontages soit, sont impossibles, soit nécessitent certaines précautions.

Est également un inconvénient des abreuvoirs connus à ce jour, le fait que le démontage de la cuve nécessite un démontage préalable de l'ensemble "cuve et support", alors qu'en ce qui le concerne, le support ne nécessite en principe aucune intervention et aucun remplacement ou même nettoyage.

Un résultat que l'invention vise à obtenir est un abreuvoir dont la cuve se démonte facilement et sans, de ce simple fait, permettre l'arrivée du liquide.

Est aussi un résultat de l'invention, un tel abreuvoir dans lequel la liaison entre la douille d'arrivée d'eau et le couvercle ne nécessite pas d'éléments complexes de raccordement et qui peut donc être facilement montée et/ou démontée.

Est encore un résultat que l'invention, un tel abreuvoir dont la cuve est démontable sans que son support soit nécessairement et préalablement démonté de la paroi de la cage.

Pour cela l'invention a pour objet un abreuvoir à niveau de liquide constant, notamment caractérisé en ce que le flotteur est par son axe associé à la cuve amovible.

L'invention sera bien comprise à l'aide de la description ci-après faite, à titre d'exemple non limitatif, en regard du dessin ci-annexé qui représente :

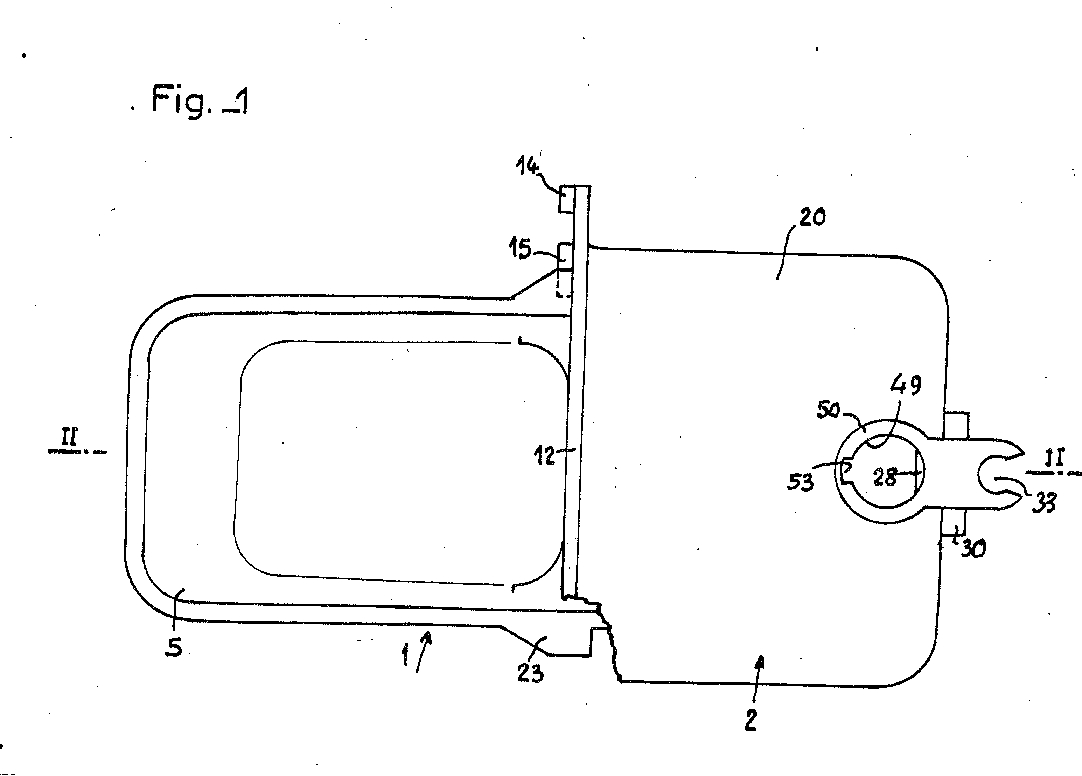

- figure 1 : la cuve et le support de l'abreuvoir en vue de dessus,

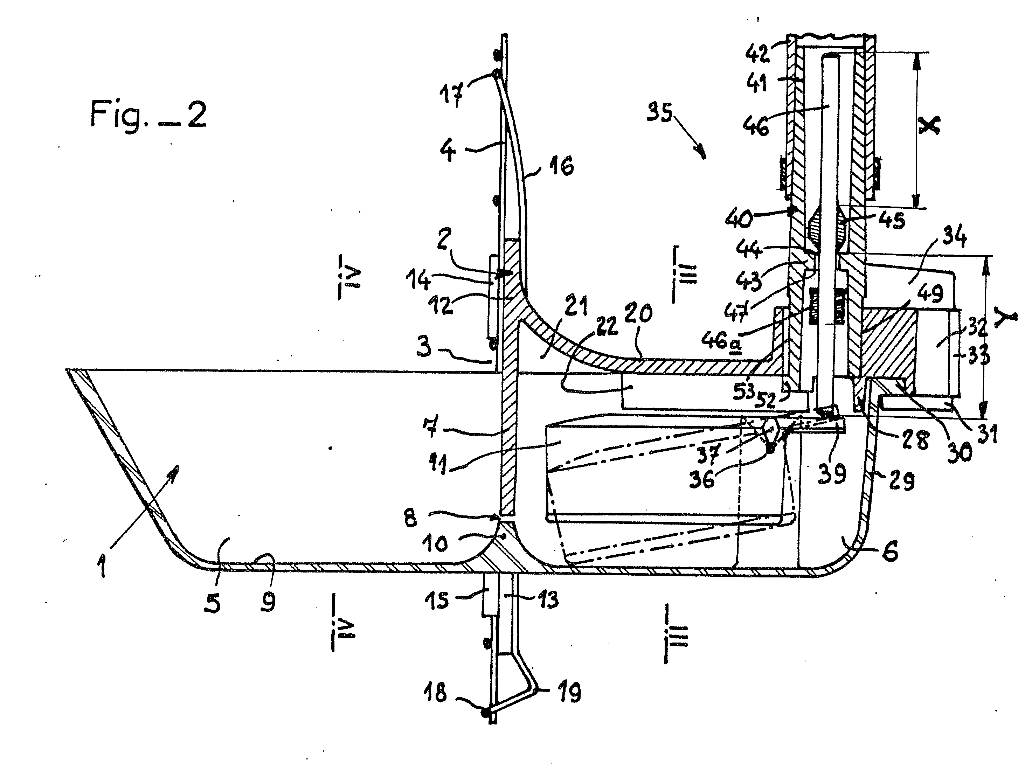

- figure 2 : une coupe selon II-II de la figure 1,

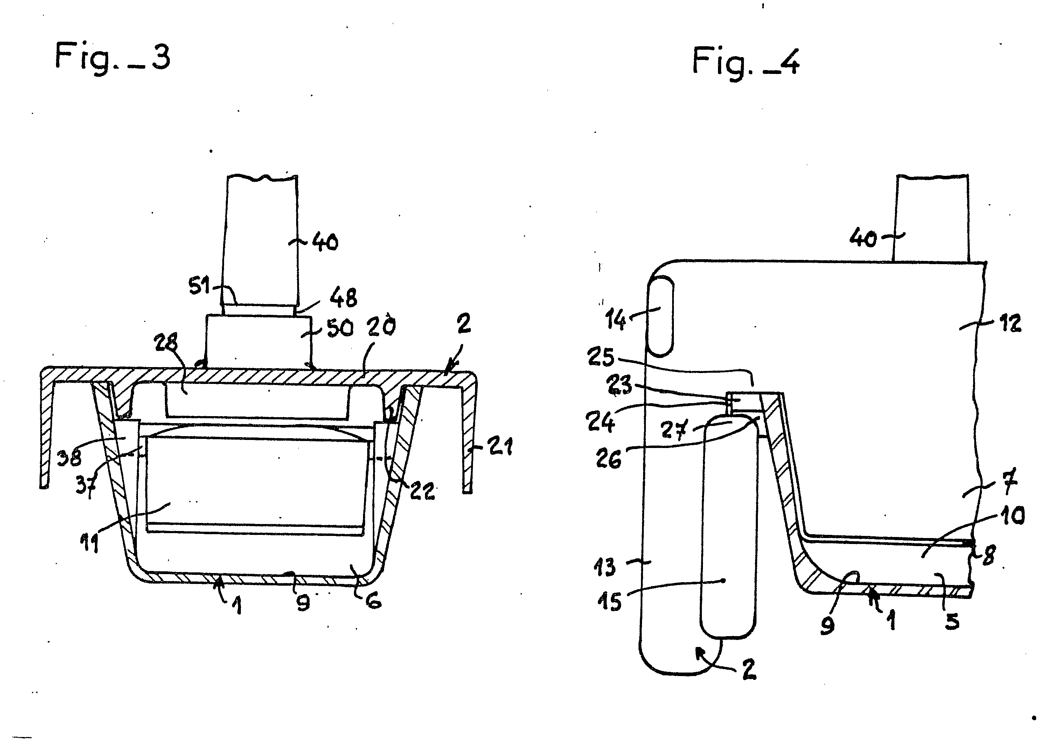

- figure 3 : une coupe selon III-III de la figure 2,
- figure 4 : une coupe selon IV-IV de la figure 2.

En se reportant au dessin, on remarque que l'abreuvoir comprend principalement une cuve amovible 1 et un support 2.

Cette cuve 1 peut être réalisée en tout matériau, de préférence résistant aux attaques de l'animal et des agents extérieurs tel que par exemple en verre trempé, en matière plastique renforcée ou en métal.

Elle est fixée par le support 2 dans l'orifice 3 aménagé dans la paroi 4 de la cage.

Elle comprend deux parties 5, 6 séparées par une cloison 7 solidaire du support 2 et située dans le plan de la paroi 4.

Ces deux parties 5, 6 sont néanmoins intercommunicantes par l'interstice 8 entre le pourtour de la cloison et le profil interne de la cuve dans la zone intermédiaire.

Dans cette zone intermédiaire, le fond 9 de la cuve présente de préférence une surélévation 10 évitant que des souillures tombée dans l'auge 5, qui est la partie située à l'intérieur de la cage, aillent vers le réservoir 6 gêner l'action du flotteur 11 qu'il contient.

Le support 2 comprend une semelle 12 en forme d'arceau entre les branches 13 duquel descend la cloison 7 précitée.

Sur sa face tournée vers l'auge et donc vers la paroi de la cage, la semelle 12 porte des plots 14, 15 s'insérant les uns 14 dans les mailles du grillage formant la paroi et les autres 15, dans l'orifice de cette paroi et ce pour positionner correctement le support par rapport à cet orifice 3 de la dite paroi 4.

Pour le maintien de cette semelle contre la paroi tout moyen connu peut être utilisé mais de préférence seront utilisées deux pinces 16 en simple fil de fer dont les extrémités 17, 18 en forme de crochet s'insèrent dans les mailles du grillage.

Ces deux pinces 16 peuvent être regroupées pour former un seul arceau de verrouillage par une traverse reliant les crochets de l'une de leurs extrémités, par exemple les crochets supérieurs 17. A leur autre extrémité et donc à la base des pinces formant les branches de l'arceau de verrouillage, avant les crochets 18, les dites branches présentent vers l'extérieur des coudes 19 facilitant la préhension des dits crochets.

Sur sa face tournée vers le réservoir 6, la semelle 12 présente, recouvrant amplement le dit réservoir, une platine 20 raidie par deux goussets 21 disposés à une certaine distance de part et d'autre des faces latérales du réservoir.

Pour positionner latéralement le réservoir et donc la cuve par rapport à la platine, sous cette platine 20 sont prévues deux nervures longitudinales 22 jouxtant chacune l'une des faces latérales internes du réservoir.

Pour leur positionnement relatif en hauteur, dans sa zone intermédiaire, la cuve porte, sur chacune de ses faces latérales externes, une aile 23 s'insérant dans un cran 24 que présente la semelle que ce cran 24 ait été découpé dans les branches 13 de l'arceau ou qu'il soit délimité par l'intervalle laissé entre la traverse 25 du dit arceau et le dessus des plots 15 de positionnement.

Quant à leur positionnement relatif longitudinal, il est obtenu grâce à une butée 26 placée sous l'aile 23 et venant heurter le bord inférieur 27 du cran 24.

Ce positionnement longitudinal est complété par une nervure transversale 28 portée par la platine et derrière laquelle, vient se placer la face interne de l'extrémité 29 du réservoir.

Pour le maintien de la cuve ainsi positionnée, son extrémité arrière 29 porte un rebord 30 sous lequel s'insère un verrou 31 associé à la platine 20.

Par exemple, ce verrou peut consister en un pène 31 tournant autour d'un axe 32 guidé en rotation dans un logement 33 présenté par la platine, lequel axe 32 peut être terminé extérieurement par un organe 34 facilitant sa préhension.

Pour permettre sa mise en place dans le support, l'extrémité avant de la cuve est fortement inclinée ; elle peut ainsi être introduite entre la cloison 7 et le pourtour de l'orifice 3 de la paroi 4. En suivant l'inclinaison de son extrémité avant la cuve est ensuite progressivement relevée afin que les ailes 23 se placent chacune face à leur cran. On termine alors l'introduction de la cuve puis on la verrouille.

Pour le démontage, les mêmes opérations sont faites en sens inverse. A noter qu'après démontage de la cuve, le support restant en place, l'orifice 3, ménagé dans la paroi 4, est suffisamment fermé par la cloison 7 pour interdire la sortie de la cage même à un très jeune animal.

Pour permettre ce démontage de la cuve sans devoir arrêter au préalable l'installation de distribution du liquide, l'abreuvoir comprend le dispositif 35 qui va maintenant être décrit.

On a vu que dans le réservoir était logé un flotteur 11. Ce flotteur 11 est articulé autour d'un axe 36 nettement excentré par rapport au corps du flotteur, par exemple matérialisé par deux couteaux 37 solidaires du flotteur et reposant dans deux vés 38 lesquels, selon une caractéristique essentielle de l'invention, sont solidaires de la cuve.

Au delà de cet axe 36, le flotteur 11 se poursuit sous la forme d'une simple patte 39 qui, du fait de sa position, a des mouvements verticaux opposés à ceux du flotteur.

Au-dessus de cette patte 39 débouche une douille 40 d'arrivée du liquide et qui, à cet effet, traverse au préalable la platine 20. A l'extrémité externe 41 de cette douille 40 se raccorde la canalisation 42 de préférence souple, reliant l'abreuvoir à la source de liquide sous pression.

Ce raccordement s'opère par emmanchement à force ou par engagement libre puis serrage par un collier.

Dans la douille 40 une collerette 43 a sa face supérieure 44 qui réalise un siège pour une soupape 45 immobilisée en translation sur une tige 46 de diamètre inférieur à celui du perçage 47 de la collerette 43, afin de traverser avec jeu le dit perçage. Afin de limiter le relevage de la soupape et d'interdire son dégagement accidentel de la douille, en-dessous de cette collerette 43, la tige 46 porte une bague $40_a$ de préférence en matériau élastique, qui est emmanchée à force sur la dite tige. Cette tige descend jusqu'à venir en saillie en dessous de la douille pour être relevée par la patte 39 du flotteur lorsqu'inversement, le niveau de liquide est trop bas, et ce, du fait que l'axe 36 est situé entre le flotteur 11 et la douille 40. Dès que le niveau augmente la patte descend suivie par la tige. Le niveau correct est atteint lorsque la dite tige a ramené la soupape 45 sur son siège 44. La pression du liquide en amont de la soupape concourre à l'obtention de l'étanchéité de la fermeture de cette soupape.

L'éloignement de la cuve avec son flotteur commande donc la fermeture de soupape et c'est pourquoi avec ce dispositif et contrairement à tous les abreuvoirs connus, on peut démonter la cuve sans arrêter l'installation d'arrivée du liquide aux divers abreuvoirs.

Afin de régler le niveau du liquide présent dans la cuve, plutôt que de modifier la position de la soupape 45 sur la tige 46, la tige se prolonge au-dessus de la soupape sur une longueur X différente de la longueur Y de la partie précitée.

De ce fait, selon le montage de la soupape dans un sens ou dans l'autre, on obtient deux niveaux distincts de liquide.

Pour, en plus de la cuve, démonter le support, par exemple, pour le changer, sans pour autant arrêter l'arrivée du liquide aux divers abreuvoirs, la douille 40 est liée de manière démontable à la platine 20.

A cet effet, l'extrémité de la douille présente un décolletage

0040135

48 s'ajustant dans un alésage 49 d'un plot 50 solidaire de la platine.

Le blocage en translation de la douille est assuré dans le sens de la pénétration par la face 51 marquant l'arrêt du décolletage 48 et, dans le sens du retrait par un doigt radial 52 formant une saillie par rapport au décolletage et donc par rapport à l'alésage. Pour permettre le passage de ce doigt 52 sous la platine 20, dans le dit alésage 49 est creusé une rainure 53 de forme complémentaire à ce doigt.

Pour le montage dans la platine de cette douille, son doigt est amené en face de la rainure et après engagement dans l'alésage, la douille est tournée autour de son axe de manière à déphaser le doigt et la rainure. A noter que, pour ce faire, il suffit que lors de la solidarisation de la douille 40 à la conduite 42 d'amenée du liquide, on s'assure que le doigt n'est pas orienté de manière à être face à la rainure ; pour l'engagement de la douille dans l'alésage, on imprime alors à la conduite une torsion suffisante pour ramener le doigt face à la rainure et, dès qu'après engagement on relâchera la dite torsion, le doigt reviendra élastiquement à sa position initiale.

Grâce à ce montage, qui déjà ne nécessite pas de moyen complexe et n'exige pas d'être étanche, on a l'avantage que l'arrivée du liquide peut être désaccouplée du dit abreuvoir sans arrêter toute l'installation puisque que par ce simple désaccouplement, la soupape se fermera.

Cela est particulièrement intéressant lorsque certaines des cages doivent recevoir une boisson spéciale.

Revendications

1. Abreuvoir à niveau de liquide constant comprenant :
- d'une part, fixée dans un orifice (3) de l'une des parois (4) d'une cage, une cuve amovible (1) qui, par une cloison (7) située dans sa zone intermédiaire qui est celle du plan de la paroi (4), est scindée en deux parties intercommunicantes, l'une, située dans la cage et formant l'auge (5), l'autre située à l'extérieur et formant un réservoir (6) dans lequel débite une douille d'arrivée de liquide sous le contrôle d'un flotteur (11) que loge le dit réservoir (6) et,
- d'autre part, pour la fixation de cette cuve (1), un support (2) comprenant lui-même une semelle (12) d'appui sur la paroi (4) de la cage et, de préférence raidie par des goussets (21), une platine (20) recouvrant le réservoir (6) et traversée par la douille (40) précitée qui forme l'arrivée de liquide et qui à cet effet, outre son raccordement à une conduite (42), elle-même reliée à une source de liquide sous pression, présente des moyens (43 à 47) qui, avec ceux (36 à 39) du flotteur, coopèrent en vue de déterminer aussi bien l'ouverture de l'arrivée du liquide, dès que le niveau de liquide présent dans la cuve descend au-dessous de celui prédéterminé, que la fermeture de cette arrivée, dès que le dit niveau atteint celui prédéterminé,
dans lequel abreuvoir, d'une part les moyens (43 à 47) présentés par la douille (40) consistent en des moyens qui, sous la pression du liquide présent en amont de la douille (40), tendent à l'ouvrir lors de la remontée vers cette douille, d'un moyen (39), associé au flotteur (11) de manière à s'élever dans le réservoir lorsque le flotteur baisse et vice versa, et d'autre part le flotteur est articulé autour d'un axe horizontal (36) situé entre le corps (11) du flotteur et la douille (40), cet abreuvoir étant CARACTERISE en ce que le flotteur (11) est par son axe (36) associé à la cuve amovible (1).

2. Abreuvoir selon la revendication 1, caractérisé en ce que les moyens présentés par la douille (40) consistent en une collerette (43) sur la face supérieure (44) de laquelle s'applique une soupape (45) portée par une tige (46) descendant sur une longueur (X, Y) suffisante pour venir en saillie en-dessous de la dite douille (40).

3. Abreuvoir selon la revendication 2 caractérisé en ce que le flotteur (11) se prolonge au delà de cet axe (36) sous la forme d'une patte (39) passant sous la douille (40).

4. Abreuvoir selon l'une quelconque des revendications 1 à 3, caractérisé en ce que la tige (46) portant la soupape (45) se prolonge au-dessus de la soupape (45) sur une longueur (X) à la fois différente de celle (Y) de la partie de la tige descendant sous la soupape (45) mais également de longueur (X) suffisante pour venir en saillie sous la douille (40) dans le cas où la tige (46) et sa soupape (45) sont montées en sens inverse.

5. Abreuvoir selon l'une quelconque des revendications 1 à 4, dont la douille est démontable du support, caractérisé en ce que la douille (40) présente un décolletage (48) s'ajustant dans un alésage (49) du couvercle dans lequel alésage est creusée une rainure (53) laissant passage à un doigt radial (52) porté par la douille de manière à former une saillie par rapport au décolletage et qui, après montage, se situe sous le couvercle.

6. Abreuvoir selon la revendication 5, caractérisé en ce que la douille (40) est solidarisée à la canalisation (42) dans une orientation telle qu'en l'absence de torsion de la canalisation, le doigt (52) est déphasé par rapport à la rainure (53).

7. Abreuvoir selon l'une quelconque des revendications 1 à 6 caractérisé en ce que le support comprend une semelle (12) en forme d'arceau entre les branches (13) duquel descend la cloison (7) et dont la face tournée vers l'auge porte des plots s'insérant entre les fils du grillage formant la paroi, que les fils délimitent des mailles où l'orifice (3), ces plots (14, 15) positionnant ainsi correctement le support (12) par rapport au dit orifice.

8. Abreuvoir selon l'une quelconque des revendications 1 à 7, caractérisé en ce que, sous la platine (20) sont prévues deux nervures longitudinales (22) jouxtant les faces latérales internes du réservoir et une nervure transversale (28) jouxtant le bord arrière de ce réservoir et en ce que dans la zone intermédiaire, la cuve présente sur chacune de ses faces latérales externes, une aile (23) s'insérant au montage dans un cran (24) que la semelle présente.

9. Abreuvoir selon l'une quelconque des revendications 1 à 8, caractérisé en ce que la cuve porte sur sa face arrière (29) un rebord (30) sous lequel s'insère un verrou associé à la platine (20).

10. Abreuvoir selon l'une quelconque des revendications 1 à 9, caractérisé en ce que la face avant de la cuve est fortement inclinée.

Fig. _1

14

15

20

II

12

49
50
53    28    II
                33
      30

5

1↗

23

2

1/3

0040135

Fig._2

Fig._3

Fig._4

Office européen
des brevets

**RAPPORT DE RECHERCHE EUROPEENNE**

EP 81 40 0700

| Catégorie | Citation du document avec indication, en cas de besoin, des parties pertinentes | Revendication concernée |
|---|---|---|
| | **DOCUMENTS CONSIDERES COMME PERTINENTS** | |
| D | FR - A - 2 308 309 (GARY)<br>* En entier * | 1,5,8,<br>9 |
| | -- | |
| | US - A - 3 861 358 (BOWELL)<br>* Colonne 2, ligne 35 - colonne 3, ligne 27; figures 1-5 * | 1 |
| | -- | |
| D | DE - C - 944 824 (MIELE)<br>* Page 2, lignes 56-72; figure 2 * | 1-4 |
| | -- | |
| | US - A - 3 410 249 (ALLEN)<br>* Colonne 3, ligne 57 - colonne 4, ligne 31; figures 2,4 * | 5 |
| | -- | |
| | US - A - 2 614 532 (STEEL)<br>* En entier * | 7,8 |
| | -- | |
| D | US - A - 1 879 332 (KULP)<br>* Page 1, lignes 18-98; figures 2,4 * | 9 |
| | -- | |
| | DE - A - 2 020 927 (OSWALD)<br>* Figures 1,3 * | 10 |
| | ---- | |

CLASSEMENT DE LA DEMANDE (Int. Cl.³)

A 01 K 7/04

DOMAINES TECHNIQUES RECHERCHES (Int. Cl.³)

A 01 K

CATEGORIE DES DOCUMENTS CITES

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons
&: membre de la même famille, document correspondant

Le présent rapport de recherche a été établi pour toutes les revendications

| Lieu de la recherche | Date d'achèvement de la recherche | Examinateur |
|---|---|---|
| La Haye | 16-07-1981 | VILBIG |

OEB Form 1503.1  06.78